(19) **Europäisches Patentamt**
**European Patent Office**
**Office européen des brevets**

(11) **EP 3 519 364 B1**

(12) **EUROPEAN PATENT SPECIFICATION**

(45) Date of publication and mention
of the grant of the patent:
**07.07.2021 Bulletin 2021/27**

(51) Int Cl.:
*C03B 9/41* *(2006.01)*  *G05B 15/02* *(2006.01)*

(21) Application number: **17795081.3**

(86) International application number:
**PCT/PL2017/000097**

(22) Date of filing: **28.09.2017**

(87) International publication number:
**WO 2018/063015 (05.04.2018 Gazette 2018/14)**

(54) **METHOD AND SYSTEM FOR CONTROLLING THE MOULD COOLING PROCESS DURING FORMING OF GLASS CONTAINERS**

VERFAHREN UND SYSTEM ZUR STEUERUNG DES KÜHLVERFAHRENS VON GUSSFORMEN WÄHREND DER HERSTELLUNG VON GLASBEHÄLTERN

PROCÉDÉ ET SYSTÈME DE COMMANDE DU PROCESSUS DE REFROIDISSEMENT DE MOULE PENDANT LA FORMATION DE RÉCIPIENTS EN VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2016 PL 41889316**

(43) Date of publication of application:
**07.08.2019 Bulletin 2019/32**

(73) Proprietor: **LWN Construction Sp. z o.o.**
**54-201 Wroclaw (PL)**

(72) Inventor: **PINDA, Aleksander**
**58-150 Strzegom (PL)**

(74) Representative: **Witek, Rafal**
**WTS Patent Attorneys**
**Witek, Sniezko & Partners**
**ul. Weigla 12**
**53-114 Wroclaw (PL)**

(56) References cited:
**EP-A2- 2 511 245    US-A- 4 368 062**
**US-A- 4 654 066**

**Description**

The object of the invention is a method for controlling the mould cooling process during forming of glass containers and a system for realising said method. The objects of the invention have application in manufacturing of glass products, specifically glass containers, medical glass, and special containers.

The glass container manufacturing process can be divided on 3 main production steps: glass melting; forming of the glass container (hot end); annealing, cooling, quality control, and packaging (cold end). Thus, the glass container manufacturing begins with glass melting in a melting tank, however one of the most crucial steps is the forming step (hot end). In general, this process is the same regardless of the manufacturer and the type of the glass container being produced, and it is automated in 80% of the global production. This process is realised by using two-row IS (individual section) glass forming machines. The remaining 20% of the global production is semi-automated or hand-made, nevertheless, the global trend is moving towards almost total elimination of these types of production.

A two-row glass forming machine is usually constructed of 6 to 12 sections that are independent of each other. Each section consists of two rows of moulds, known as: blank moulds (blank side), in which the so-called parisons are formed from the gobs, and blow moulds (blow side), in which the finished containers are formed.

The moulds deployed on the blank moulds, as well as those deployed on the blow moulds differ from each other in terms of the forming material being used, the type of cooling, the type of container being manufactured, and the type of machine being employed. The forming process of IS machines is controlled by means of an electronic controller. Each container production cycle is divided on 360°, in which the machine performs a series of various functions associated with the container manufacturing. Each performed function is limited by a specified amount of degrees, during which it is performed. A time unit specifying the 360° production cycle is defined by the gob cutting rate. The rate setting according to which the individual events take place is called timing and constitutes the most crucial setting of the forming process. The sections of the forming machine are controlled independently. This means that they have individual timing controllers, which facilitates e.g. manufacturing of different types of glass containers with different production rates on one machine. The function of moulds is not only to shape the gob in the correct way, but also to cool it to the temperature that allows forming. In glass forming machines, it is possible to apply the following types of mould cooling:
The VertiFlow, InVertiFlow method - the main principle of operation of each of the listed cooling types is the same, and the cooling takes place by supplying the coolant from below (vertiflow) or above (invertiflow) the mould to the axial channels made in the cross section of the glass forming mould. The coolant is provided only when the mould is closed and the glass is contained within it. The time during which the mould is cooled is limited by the timing setting on the glass forming machine and is associated with the time during which the mould is in the closed state.

The 360° cooling, E-MOC cooling, Axial cooling method - the principle of operation is similar to the above with the difference that the air is supplied by the hangers, on which the mould is mounted, and is not limited by any event on the machine, which means that the coolant is supplied from the inside towards the bottom and the top of the mould. The hangers are usually located in the centre of the mould. Cooling can be realised through 360° of the production cycle.

The Stack cooling, radial cooling method - it is realised by air blowing on the outside of the moulds. The coolant is distributed by nozzles positioned on the edges of the section. Cooling can also take place through 360° of the manufacturing cycle and is not limited by any other event in the machine's timing.

There is also a possibility of combining various cooling types at the same time on a single section, depending on the type of IS machine.

Glass forming machines are differentiated also on terms of: the number of sections, the number of gobs, the maximum production rate, the size of moulds possible to deploy on the machine, the mould cooling method, the driving method of the machine's mechanisms, and the type of glass container being produced. Regardless of the construction outlines mentioned above, the principle of operation of IS type machines is usually convergent and includes the following steps:
The step of supplying the glass by feeders (i.e. channels through which the glass flows from the melting tank) to the glass forming machine. In the feeders, the glass temperature is lowered to the temperature facilitating forming of glass containers, and is thermally uniformed.

The step of forming a glass gob (i.e. a portion of glass, from which, subsequently, the glass container is formed). The continuous glass flow is provided from the feeders to the distributor, where, by means of a plunger, it is pushed through a narrow tube. After leaving the tube, the glass is cut, forming a shaped gob. The gob sizes differ from each other in terms of weight and length. These parameters depend on the size of the glass container being manufactured and its target mass. The gob size is controlled by the cutting rate of the shears mounted on the machine's head.

In the next step, each gob is directed, by means of the distributor, to the currently unoccupied mould on the blank mould side of the section in the glass forming machine, in which the glass container forming process begins.

The parison forming step. After the gob enters the blank mould, under pressure or by means of a plunger, a parison is formed, which is subsequently transported to the mould on the blow mould side.

After delivering the parison to the mould on the blow mould side, the parison is formed in the final shape of the glass container by means of blowing, and placed on the conveyor belt.

A control system for mould cooling in a glass forming machine is known from the American Patent US3953188. The system involves compensating the pressure set point for the control of the cooling air to correct for changes in the temperature of the cooling air and changes in the mass flow rate of the glass. During maximum and minimum flow conditions for the cooling air the heat transfer equilibrium between the coolant and the parisons being cooled is modified by modifying the set points of the temperature controllers on the feeder supplying the forming machine or alternatively by changing the production rate of the forming machine so that the parisons are usually stored at the desired temperature with the limited range of coolant supply.

DE102004054254, in turn, discloses a method for automatic control of the glass mould cooling process used in glass forming machines. The cited solution includes an automatic measurement, storing, and controlling the internal temperature value of the blank and blow moulds for each individual glass forming mould, and afterwards, comparing the control parameter and the reference parameter, and determining the compensating parameter for each individual glass forming mould. The compensating parameter affects the cooling efficiency of each mould, primarily by using electrical, hydraulic, or pneumatic adjustment elements and enables obtaining the desired internal temperature of the mould by using a temperature sensor placed on every station with the glass forming moulds, in order to measure the internal temperature of the moulds.

In turn, from European Patent Application EP1136453, a mould cooling system used in glass forming machines is known, using a series of independent fans, engaging the frame of each section of the machine. A mould cooling system for glass forming machines with multiple sections comprises a cooling apparatus for each section, driven by a motor controlled by a control system, that allows regulating the speed of the motor and, consequently, the flow and pressure of the cooling air, which in turn translates to controlling the mould temperature which changes during the process of forming glass elements.

Each of the above solutions concentrates mainly on the cooling system and its functionality.

One of the main issues limiting the production rate of glass containers is the cooling of moulds in the sections of the glass forming machine. Furthermore, this process is exceptionally energy-intensive. The problem of cooling is present both on the blank mould side, and on the blow mould side, independently of the glass forming machine configuration and the product being manufactured. Every process of glass containers production on the glass forming machine is a finished process, however, it can be distributed over a very long period of time, in which no interruption occurs. This means that the moulds, into which the glass is fed in liquid form, are subjected to long-term exposure to high temperature. The temperature of the moulds, due to the long lasting and very fast manufacturing process, increases, due to the lack of a resting period during which the moulds could cool off. At the same time, the range between the glass temperature, in which it can be formed, and the temperature, in which this process is impossible or very difficult, is very small. If the moulds reach an excessively high temperature, preventing cooling of the glass to an adequate temperature, the manufacturing process becomes disrupted. Insufficient cooling of the moulds can cause defects in the shape of the formed container, defects in the glass, and quicker wear of the moulds or even their damage. Lack of adequate mould cooling is also associated with very high energy losses (repeated glass melting, driving of the glass forming machine, driving of mould cooling fans, etc.), and therefore, with high economic losses for the container producer. Many glass container producers are forced to limit the production rate or to limit the number of sections, on which the containers are manufactured (e.g. on a 10-section machine, the containers are manufactured only on 8 sections), which also causes high economic losses and adversely affects the manufacturing profitability. That is why it is extremely crucial, that the moulds maintain a constant temperature on a level facilitating forming of glass containers without any defects.

The mould temperature is affected by the following parameters: glass temperature, CRV manufacturing speed (Cavity Rate, defining the number of cuts per minute), type of mould material, mould structure, timing set on the forming machine, type of cooling being used, cooling air parameters. Said parameters characterise every production of glass containers and occur independently of applied machine, type of container being manufactured, or glass container producer. In order to maintain the mould temperature on an adequate level, it is necessary to provide a possibly best heat exchange between the mould and the coolant. The following parameters have the biggest influence on this process: air temperature on the inlet of the fan, proper selection of working points of the mould cooling fan, type of air flow in the cooling nozzles, proper timing setting on the machine.

The air temperature on the fan inlet is especially important for the glass container producers, whose manufacturing plants are located in countries having a higher average annual temperature (e.g. Saudi Arabia, Australia) and/or during the summer period in general. The air temperature on the fan inlet is a very important factor, which hinders the forming process, because its excessive value causes a decrease of coolant thermal capacity, which results in an insufficient heat transfer from the mould.

Usually, the working parameters of the fan are selected by glassworks employees on the basis of experience or data supplied by the glass forming machine producer. Improper selection of the fan working points causes significant issues with mould cooling, at times even preventing their proper cooling. Wrong selection of the fan results in operation outside the optimal working point (pumping, overload, etc.), which in turn can result in damage of the bearings, housing cracks, motor overheat, excessive noise, cracks of the conduit.

Another parameter is the type of air flow in the cooling nozzles (in case of radial cooling) and/or cooling channels (in case of axial cooling). In case of laminar flow, the heat convection process between the mould and the coolant is lower than in case of turbulent flow. The flow type in the mould channels or cooling nozzles is associated with the structure of channels suppling the coolant and the structure of machine's bed.

Proper timing setting on the machine has a very strong influence on the mould cooling, however its duration is limited by the set production rate. The higher the production rate, the less time there is in timing for the cooling process event. This issue is present especially in case of axial cooling, particularly in case of vertiflow and invertiflow cooling.

The structure and type of mould material account for their mechanical durability, but very rarely the mould structure in terms of its thermal properties, heat exchange, and providing proper cooling, is considered. This approach results in sometimes difficult, long and tedious process of sampling of the newly implemented product (before the actual manufacturing process, every container is tested on the machine in terms of quality and manufacturing possibility, this process is called sampling).

The air humidity on the fan inlet has the lowest impact on the cooling efficiency and the heat exchange between the air and the mould. The humid air has a larger heat capacity than dry air. Only very large fluctuations of humidity can significantly affect the cooling efficiency.

In known glass container forming machines, air is used as the coolant. Usually, in order to pump the cooling air, radial fans are employed, which pump the air through a system of conduits and regulating flaps to the bed of the forming machine, where it is distributed to individual sections, and further to the glass forming moulds. The cooling process involves transferring an appropriate amount of heat supplied by the glass gob to the glass forming mould by providing it with the coolant, in this case, air. This process is intended to ensure maintaining the adequate temperature of the glass present in the mould, in which the glass is formable. In consideration of the fact that the temperature range, in which the glass is formable (i.e. it can be formed into a glass container without any manufacturing defects) is very small, the cooling process is not only very complicated, but it is also the most important factor during forming of glass containers. Nevertheless, the impact of this process, due to its complexity and nonlinearity, is minimised or overlooked by many producers of glass forming machines, as well as of glass containers.

The parameters affecting the mould temperature and those affecting the mould cooling efficiency overlap and depend on each other. It shows how complex the forming process is, as well as how difficult it is to obtain an adequate heat exchange between the mould and the coolant.

Therefore, the technical problem remaining to be solved is proposing such a method and system for controlling the mould cooling process during forming of glass containers, that will allow optimization of the structure of glass forming moulds, shortening the time to prepare the system for manufacture and setting it, will allow constant control and real-time optimization of the manufacturing process, will provide reduction of production waste, significantly affecting obtaining of economic benefits. Furthermore, it is desired to provide a better control for the process of annealing of manufactured products and lower the energy-intensity of the whole process, and limit the work time of the glass forming machines' operators. Surprisingly, said problems were solved by the presented invention. US4654066 describes a system to control cooling of molds in glassware forming systems.

The first object of the invention is a method for controlling the mould cooling process during forming of glass containers in an IS type glass forming machine, characterised in that, it involves the following steps:

a) analysing the mould structure in terms of heat exchange between the glass, the mould, and the coolant,

b) receiving data from sensors related to the pressure loss in the conduit supplying the coolant to the mould, pressure loss in the glass forming machine, to the point of entering the mould by the coolant, temperature of the gob before being fed into the blank mould, air temperature and humidity in the conduit, after completion of the compression work by the fan, and introducing it to the calculation module,

c) introducing the desired manufacturing speed and the maximum time of realising the cooling event in the timing, as well as the type of material used, from which the mould has been manufactured and/or the maximum mould temperature allowed, into the calculation module,

d) based on the introduced and received data, performing numerical calculations in the calculation module, deriving the working point of the fan and cooling event timing, providing the maximum efficiency of the cooling system.

In step (d), it is also possible to obtain the information, whether the desired production rate can yet be increased, or whether the production should be prolonged, since there is no possibility to maintain the proper mould temperature.

In the preferred embodiment of the invention, the mould structure analysis in step (a) involves the analysis of already existing moulds that are being used for production or moulds in the construction phase, before implementing for production.

In another preferred embodiment of the invention, the numerical calculations are performed with maintaining the calculation error in the range of 3% to 5%.

In the next preferred embodiment of the invention, the working point of the fan includes the static pressure and the flow volume of the coolant.

Preferably, performing the numerical calculations in the calculation module returns the structural parameters of the cooling channels in the moulds, preferably their shape, placement, and size.

More preferably, performing the numerical calculations in the calculation module returns the structural parameters of the cooling nozzles in the moulds, preferably their shape, placement, and size.

In the preferred embodiment of the invention, additionally, the current data from the switch box of the coolant pump and data related to the gob cutting rate are introduced to the calculation module.

In another preferred embodiment of the invention, the numerical calculations are performed periodically.

The second object of the invention is a system for controlling the mould cooling process during forming of glass containers in an IS type glass forming machine, characterised in that, it comprises a calculation module connected to the timing control module of the glass forming machine, to the fan controller, and to the sensors providing data for the calculations.

In a preferred embodiment of the invention, the system additionally comprises a heat exchanger lowering the temperature of the coolant upstream from the entrance to the glass forming machine section.

In another preferred embodiment of the invention, the sensors providing data for the calculations have been chosen from the group comprising: coolant temperature sensors, humidity sensor, static pressure sensor, main conduit differential pressure sensor, glass gob temperature sensor, mould temperature sensor, glass container temperature sensor after leaving the blow mould.

In a next preferred embodiment of the invention, the fan comprises two exchangeable impellers or an impeller having variable blade geometry.

Preferably, the system comprises two fans supplying the coolant to the blank moulds and to the blow moulds, respectively.

More preferably, the system additionally comprises an air humidifier, increasing the thermal capacity of the coolant.

Solution according to the present invention takes into account three most important factors that have a decisive impact on the cooling process efficiency, which were not applied in the previous approaches, that is: mould structure analysis allowing optimisation of the heat exchange between the glass, the mould, and the coolant, timing setting and time duration of the cooing event, analysis of the set production rate and its optimisation allowing an optimal selection of correlation between the production rate, mould temperature, fan energy consumption, and, minimizing the production losses, as well as proper selection of fan parameters (static pressure and flow volume) and its working point at maximum efficiency and the lowest energy consumption depending on the size and type of glass containers being produced.

The order of the parameters listed above is not accidental and it defines whether the manufacturing process runs optimally, which means at the highest production rate, with the lowest amount of manufacturing losses, and with possibly low energy consumption. Employing numerical calculations allows significant limiting of costs associated with production optimization during its execution, and in certain cases even eliminating such costs. In this case, the crucial point was developing the calculation algorithm that would make possible, in a sufficiently short time, to obtain results affected by errors in range of 3% to 5%. This algorithm provides very high savings associated with implementation of production, as well as the production process itself. It is vital for the time to perform the calculations to be shorter than the production cycle of one glass container on one section, which will allow correlating the process parameters after every production cycle.

The numerical calculations performed in order to optimize and control the glass forming mould cooling process and the manufacturing of glass containers can be divided into two categories: calculations for already exiting moulds that are used for production and calculations for moulds that are yet in their construction phase, before implementing into production.

In case of the first variant, the purpose of thermal calculations of cooling of already existing moulds is to define, whether there is a possibility to achieve an adequate thermal convection from the mould with the current cooling installation and production rate. From these calculations, information can be derived, whether any changes should be made with regard to the glass forming machine or fan settings, or whether the mould or fan structure should be modernized or modified.

In the second case, optimization of the mould in terms of heat exchange before commencing production allows adjusting it to the set production rate and optimization of cooling efficiency of the fan. The developed calculation algorithm allows shortening to the minimum the time required to obtain the cooling analysis results, while maintaining the range of calculation error of 3% to 5%.

The numerical calculations take into account the following parameters: pressure losses in the conduit supplying the coolant to the mould, pressure losses in the glass forming machine, up to the point of entering the mould by the coolant, material, the mould is or is intended to be made of, temperature of the gob before being fed into the blank mould, air temperature in the conduit, after performing the compression work by the fan, air humidity, set production rate, and the maximum time in timing in which the cooling event can be realised, optimal selection of the working point of the fan, in order to ensure the maximum efficiency.

Depending on expectations and set parameters, performing the numerical calculations provides the following information in terms of optimal selection of the fan and its working conditions for the given product or group of products, optimization of shape, location and size of the cooling channels in the moulds, optimization of shape, location and size of the mould cooling nozzles and optimization of the cooling event setting in machine's timing and production rate setting on maximum, assuming that the production losses resulting from inappropriate mould temperature are the lowest or completely eliminated.

The calculations can be performed before installing the automatic mould cooling system. They have to precede any other action intended to optimize the process. The thermal calculations can be performed for individual products or a group of products characterised by similar dimensions.

After analysing the numerical and structural calculations, the results are send to the calculation module integrated with the program controlling the timing of glass forming machine. By using this module, it is possible to calculate (simulate) the temperature of the glass forming moulds deployed on the machine during their manufacturing. The mould cooling system can comprise a heat exchanger installed downstream from the coolant pump. Implementation of the heat exchanger allows maintaining constant temperature and humidity of the coolant regardless of changes in the environmental conditions. The heat exchanger can be supplied by the coolant from already existing circulation or an additional chiller can be employed. The mould cooling system can comprise a humidifier (a vapour condenser) installed downstream from the coolant pump. By implementing such placement, it is possible to increase the thermal capacity of the coolant. As a result, more amount of heat can be transferred from the mould in a shorter period of time.

On the coolant supplying conduit, upstream from the section entrance, on the blank mould side, as well as on the blow mould side, control flaps are installed which send a signal related to their position, to the calculation module. The control system is supplemented by a series of sensors, divided into two groups: a group of sensors providing the data necessary for calculations performed periodically in the calculation module, and a group of sensors verifying the calculation data (optionally).

The first group of sensors includes the following: temperature sensors and humidity sensor of the coolant, static pressure sensors, differential pressure sensor, glass gob temperature sensor, coolant temperature sensors in the conduit downstream from the pumping device and downstream from the heat exchanger, lowering the temperature of the coolant, or the humidifier immediately upstream from the entrance to the section of the glass forming machine, humidity sensor downstream from the humidifier immediately upstream from the entrance to the section of the glass forming machine. The number of sensors can correspond with the number of sections in the glass forming machine or one central sensor for all the sections can be installed (this solution can result in a less precise control of the device). Moreover, in the first group of sensors, the following can be distinguished: humidity sensor installed in the main conduit downstream from the pumping device and downstream from the heat exchanger lowering the temperature of the coolant, static pressure sensors installed on the conduit upstream from every section immediately downstream from the control flaps, differential pressure sensor installed on the main conduit, that allows determining the volume flow value. This sensor is deployed only in the case where a frequency converter is not used to control the coolant pump or in the case where radial cooling is used.

The second group comprises mould temperature sensors and temperature sensors of glass container, after leaving the blow mould, upstream from the conveyor entrance. These sensors are optional, are used to verify the calculations, and can be e.g. deployed only in the phase of calibrating the system.

The mould temperature sensors can be installed in various configurations, e.g.: only on the first and the last section on the blow mould side, or on the first and the last section on the blow mould and the blank mould side.

Additionally, the calculation module receives the current data from the switch box of the coolant pump and the data related to the cutting rate (production rate) and timing.

The entry data is the set temperature of the inner part on the glass forming mould or the container after leaving it. An auxiliary data is the desired manufacturing speed. This data constitutes the data to be verified by the system e.g., whether it is possible to achieve the set mould temperature at the set production rate.

The control system, on the basis of the data from the first group of sensors and the pre-introduced data of the glass forming mould structure, using the implemented calculation algorithms and the calculation method, calculates the following periodically: working point of the fan setting and the cooling timing of the machine, and corrects their setting in a continuous manner after every production cycle or after a change in one of the input parameters, (which results in high nonlinearity of the calculations) depending on the set or measured input data. The timing and the working point of the fan can be additionally corrected and checked, especially during the system calibration phase, by a system of mould temperature sensors deployed in the glass forming machine. The correction of calculated temperature in relation to the one measured in the calibration phase takes place using the correction coefficient of the difference between the calculated and the measured temperature.

In the case of both axial and radial cooling on one glass forming machine and radial fans as the coolant pumps, each of the fans should be equipped with two exchangeable impellers: one that allows achieving a high volume of pumped coolant at low pressure, and the second that allows achieving a high static pressure at lower flow volume. It is also possible to implement fans with impellers having variable blade geometry. By using this solution, it will be possible to install motors with significantly lower power and improve the efficiency of the fans pumping the coolant.

The cooling process control system during forming of glass containers, presented above, allows optimization of glass forming mould structure, in terms of increasing the thermal capacity of heat exchange between the glass, glass forming mould, and the coolant. At the same time, a shorter time required for sampling of the glass container, which is newly implemented in production, can be observed, as well as a shorter time necessary to set the mould cooling timing, such that, the glass container production and production setting optimization will be possible. Another advantage is reducing the amount of production waste resulting from wrong selection of cooling, and the number of defects in the produced containers, and consequently, increasing their quality. The system provides temperature control for the manufactured container before it is placed on the accumulation table, and consequently, a better opportunity to control the process of its annealing. Using the system according to the invention allows an optimal selection of the fan working point, as well as constant control and maintaining the same convection exchange between the glass, the glass forming mould and the coolant, which is associated with stabilizing the conditions of the production process, and also reducing the amount of work for the machine's operator. The system allows primarily an increase in production rate or verifying, whether it is possible, and prolonging the life of glass forming moulds.

Each of the advantages listed above enables a significant cost reduction of glass container production, whether by lowering the energy consumption of coolant pumps and the glass forming machine, or by limiting the number of defective containers being manufactured, as well as by increasing the production rate.

Exemplary embodiments of the invention are presented in the drawing, in which fig. 1 shows a schematic diagram of the system for controlling the mould cooling process during forming of glass containers according to one embodiment of the present invention, fig. 2 shows a schematic diagram of the system for controlling the mould cooling process during forming of glass containers according to another embodiment of the present invention, whereas fig. 3 shows a schematic diagram of the system for controlling the mould cooling process during forming of glass containers according to a next embodiment of the present invention.

Example

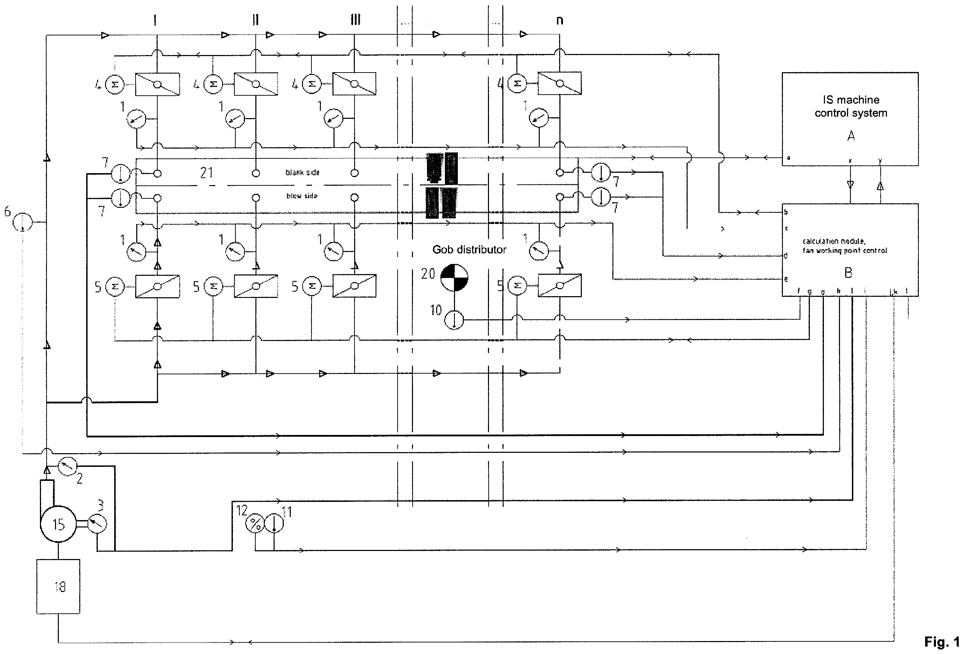

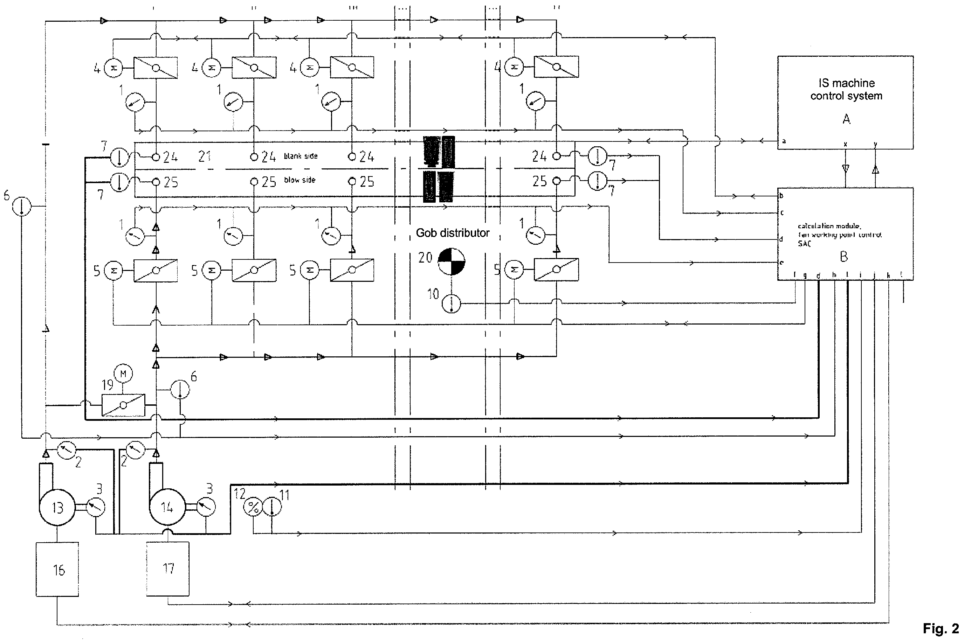

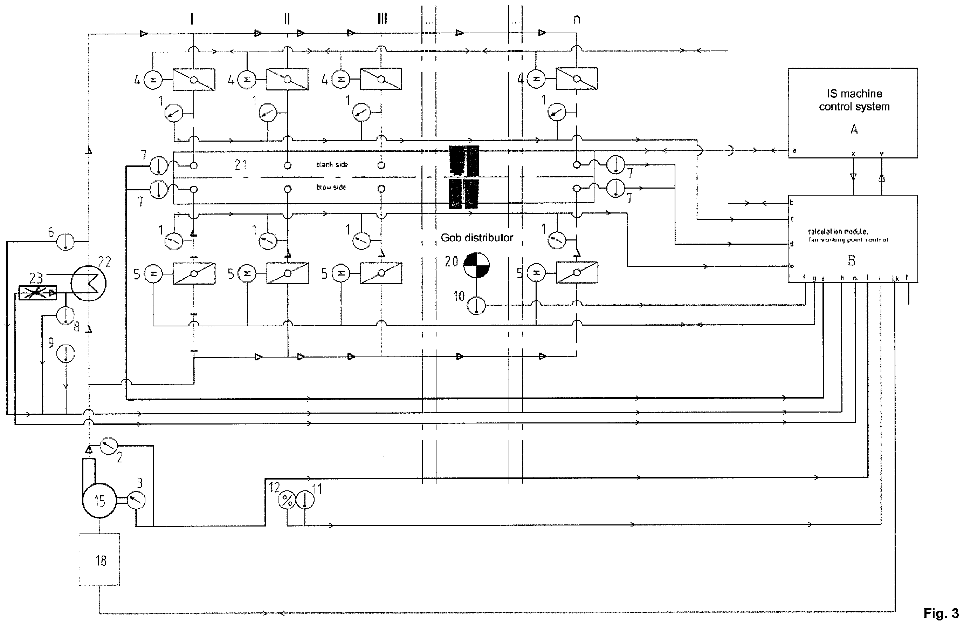

Depending on the type of the glass forming machine 21 and the glass container manufacturer, the present invention employs one or two radial fans 13, 14, 15 for mould cooling. In the case where one fan 15 is used, it pumps the air to the mould on the blank mould side 24 and on the blow mould side 25 (fig. 1). When two cooling fans 13 and 14 are used, one fan 13 is connected to the blank mould side 24 and the second fan 14 is connected to the blow mould side 25 in a two-row glass forming machine 21 (fig. 2). They can be connected by a by-pass, on which a cutoff flap 19 is deployed, by-pass is used to supply the cooling air from the blow mould fan 14 to the blank mould conduit or vice versa, in case if one of the fans 13, 14 is damaged or if one fan 13 or 14 is able to provide an adequate amount of cooling air. In the previously known mould cooling systems, particularly in hot countries, a heat exchanger 22, usually using water to cool the mould cooling air, can be deployed on the conduit supplying the cooling air. A system using the heat exchanger 22 (schematically shown in fig. 3), is characterised by a high constancy of cooling parameters, both during the winter period and summer period.

The mould cooling process control system is based on continuous analysis and modification of parameters having a direct influence on the cooling process. In order to simplify understanding of the system's principle of operation, all parameters influencing it, during the glass container production, are described below. All parameters can be divided into 4 subgroups:

1. Environment parameters, these parameters are always input parameters, they can only be read from the sensors of mould cooling process control system.

$$f(P_{env.}) = p_{bar.}, t_{env.}, h_{env.}, A,$$

where:

$P_{env.}$ - environment parameters,
$p_{bar.}$ - barometric pressure,
$t_{env.}$ - environment temperature, in location of the pumps,
$h_{env.}$ - environment humidity, in location of the pumps,
$A$ - height above mean sea level of production plant location.

2. Coolant parameters. A set of parameters directly responsible for the efficiency of thermal convection between the air and the mould.

$$f(P_{cool.}) = Q_{cool.}, p_{cool.stat.}, t_{cool.}, h_{cool.}, R_e, \rho$$

where:

$P_{cool.}$- coolant parameters,

$Q_{cool.}$ - coolant volume flow, generated by the pumping element, in this case a radial fan,

$p_{cool.stat.}$ - coolant static pressure, as above,

$t_{cool.}$ - coolant temperature in the conduit after completion of compression work by the pump and after leaving the heat exchanger 22, if present,

$h_{cool.}$ - coolant humidity after completion of compression work by the pump and after leaving the heat exchanger 22, if present. It characterises the content of water particles in the cooling air, this parameter is very important if the heat exchanger 22 is present,

$R_e$ - type of flow in the cooling channels. It can laminar or turbulent,

$\rho$ - coolant density,

3. Structure parameters of glass forming moulds. A set of parameters resulting from the glass forming mould structure, impacting the thermal convection between the glass - mould and the coolant.

$$f\left(P_{str.}\right) = M_m, i_{gb.}, t_{cool.}, m_{con.}, V_{con.}$$

where:

$P_{str.}$- mould structure,

$M_m$ - material from which the mould and its parts are made. This factor impacts the speed of thermal convection between the glass - mould and the coolant. It depends on the various thermal conductivity $\lambda$ of the materials from which the glass forming mould and its elements are made.

$i_{gb.}$ - number of gobs in the glass forming machine, from which glass containers and produced simultaneously on one section of the glass forming machine 21. It impacts the size of the space dedicated to the mould of an individual glass container. The higher the number of gobs, the less space there is to deploy the glass forming moulds, and the smaller their external dimensions, which influences the amount of the coolant intended to receive the heat from the mould. When the number of gobs on the glass forming machine increases:

- the space for mould deployment decreases, and therefore the space for supplying the coolant to an individual mould decreases, which results in lowering the thickness of the mould wall receiving the heat from the glass.
- the requirement for the coolant increases, since it must receive a higher amount of heat from the glass moulds.

$t_{cool.}$ - type of deployed cooling. The mould structure is different for every type of cooling used in glass container production. The type of cooling employed has the strongest impact on the output selection of the fan working point.

$m_{con.}$ - mass of the glass container being produced, like the number of gobs on the glass forming machine, impacts the volume of space for mould deployment and the amount of heat that will be provided, along with the gob, into the mould. The higher the gob mass, the more heat must be transferred from the mould.

$V_{con.}$ - volume of the glass container being produced

4. Production parameters. A set of parameters that have a direct impact on mould temperature and the heat exchange between the glass - mould and the coolant. These parameters depend on the settings and the type of the forming machine.

$$f\left(P_{prod.}\right) = r_{prod.}, t_{gb.}, T_{cool.}, t_m.$$

where:

$P_{prod.}$- production parameters,

$r_{prod.}$ - production rate, that is the number of cuts per minute. Time of this setting on the forming machine impacts the time of every event in the production cycle on the glass forming machine.

$t_{gb.}$ - gob temperature on the distributor. This parameter has a significant impact on the mould temperature.

$T_{cool.}$ - time duration of the cooling event in the machine's timing. This setting describes for how long the cooling is to be provided to the mould.

$t_m.$ - maximum mould temperature allowed, ensuring that it will not overheat and facilitating forming of glass containers. Mould temperature that is too high leads to manufacturing defects and to damaging or more rapid wear of the mould.

It has been found that the parameter groups presented above depend on each other. Only the environment parameters affect the other parameters one way, which means that their change causes a change in the remaining three groups of parameters, but any change in one of the parameters in these groups does not affect the environment parameters. Furthermore, change in any parameter within one group of parameters in the $P_{str.}$, $P_{cool.}$, $P_{prod.}$ group can affect the changes of parameters in the remaining groups, excluding $P_{env.}$. It should be noted that the parameter changes within the $P_{str.}$ group can be made only before the glass container is implemented in production or during the replacement of glass forming moulds. Any change in any parameters within this group is associated with the need to reconstruct or manufacture a new set of glass forming moulds.

The operation of the automatic glass forming mould cooling system is divided into 3 steps:

 i) preparation for implementing the system into production,

 ii) implementing the system into production and selection of correction coefficients,

 iii) actual operation of the automatic mould cooling system.

The principle of operation of the mould cooling control process has been described using an exemplary system employing two individual fans 13 and 14 for blank mould 24 and blow mould 25 cooling.

In step (i), by the main control module A of the forming machine, an automatic SAC mould cooling system control module B is installed. Into the SAC module B, a numerical model of the mould of the currently produced, or implemented into production, glass container is introduced, the numerical model is reflected by means of the first row elements in the currently employed discretisation scheme. The number of grid elements must allow obtaining a calculation result affected by maximum 4% error in relation to the measurements from the temperature sensors installed on the machine 21, and depends on the complexity level and size of the glass container being produced. The working curves of the cooling fans 13 and 14 are also added to the calculation module B, for blank moulds 24 and blow moulds 25, respectively, with marked nominal working point of the fan (this data is provided by the fan manufacturer). The calculated setting of the fan 13 and 14 (pressure and volume flow), for set desired mould temperature, are marked on the working curves of the fan (provided by their manufacturer). In case of work efficiency below 75%, the calculation module B communicates the necessity to deploy another impeller, whose working curve is better suited for the set working point.

As input data set manually in the calculation module B, the following parameters from the groups listed above are employed:

 • All parameters from the $P_{str.}$ parameter group,

 • Parameter A from $P_{env.}$ parameter group,

 • Parameter $t_{m.}$ of the maximum temperature allowed from the $P_{prod.}$ parameter group.

The following parameters from the groups listed above are set as unknown settings on the machine:

 • $p_{cool. stat.}$, $Q_{cool.}$ from the $P_{cool.}$ parameter group,

 • $r_{prod.}$, $T_{cool.}$ from the $P_{prod.}$ parameter group.

In step (ii), after implementation of all of the input and unknown data, sensors 1-3, 6-12 are connected to the calculation module B and the signals are delivered in the following order:

 • signal f concerning the gob temperature, read from sensor 10,

 • signal i, environment parameters read from the temperature and humidity sensors 11, 12 mounted on the fan suction.

After providing the data listed above, by means of motors with frequency converters 16, 17, the cooling fans 14, 13 of blank moulds 25 and blow moulds 24 are initiated. Flaps 5, 4 on the blank mould 25 side and blow mould 24 side, respectively, during initiation of fans 13 and 14, are in a closed position (information about the position of flaps is provided from the potentiometer to the calculation module B by means of signal g and b).

After starting the fans 13 and 14, the calculation module B is provided with the signals c, e, l from the static pressure sensors 1 and 2, and from the differential pressure sensor 3, which can be deployed on the suction side of the fan or in the conduit on the pumping side. The SAC module B is also provided with the readings from the coolant temperature sensor in the conduit 6, after performing the compression work by the fans (signal h). Additionally, the calculation module B, by means of signals j, k from the frequency convertors 16, 17, is provided with information about the rate of rotation (or frequency) and power consumed on the motor shaft of the cooling fans of respective sections 13, 14. After reaching the pre-set (in the first step) working point by the fans 13, 14, control flaps 4, 5, on the conduits supplying the air to individual sections, are opened, so that the static pressure between the individual sections will be on the same level. At the time of opening the flaps 4, 5, the fan 13, 14 should be at the set working point, which facilitates deriving the pressure losses caused by the coolant flow and defining the requirement for the cooling air in the glass forming moulds 24, 25.

After initiating production (regardless if during the sampling process, or during the actual production), the information listed above is delivered to the calculation module B, used to derive the actual (production) variable algorithm of the cooling curve, and heating of the glass mould. Considering the high number of variables, the actual cooling curve changes with a change in every parameter and is impossible to define by one and the same mathematical equation. The calculations for every production cycle must be performed anew. The cooling and heating curves of the glass forming mould are used to derive the mould temperature (at initial timing settings of the machine and the fan), calculated by means of the finite element method.

After receiving the information from all the sensors, the calculation module B performs calculations of the following settings:

- static pressure and volume flow, that is, the working point of the fan 13, 14, at which its energy efficiency is the highest. The setting is realised by means of changing the frequency (and consequently the rotation rate of the impeller) of cooling fans 13, 14 of blank moulds 24 and blow moulds 25, respectively. Selection of the optimal working point impacts the efficiency of its operation, energy consumption on the impeller shaft, and therefore the energy consumption.

- the cooling setting in the timing of machine 21, which impacts the production rate. The shorter the cooling event duration, the shorter the production cycle duration.

Calculation module B checks the feedback between the setting of fan 13, 14 working point and the cooling duration in machine's timing. Both of these settings are chosen in order to ensure a maximum production rate, while not exceeding the maximum mould temperature, at the same time, keeping the fan 13, 14 working point where it has the highest efficiency.

In step (iii), during the mould cooling control system operation, after every production cycle, the SAC module B receives signals from all sensors 1-3 and 6-12. In case any changes in any environment or temperature parameters occur, the calculation module B derives new settings for the fan 13, 14 working point and machine's timing. After every production cycle, SAC module B receives signal d from mould temperature sensors 7 installed on the forming machine 21 (maximum 3 sensors installed permanently in mould holders). The mould temperature measurement can be performed only at the time when the mould is opened. Considering a high measurement inaccuracy and possibly high measurement error, this signal is treated as information verifying the calculations made in SAC module B. If the measurements from four consecutive cycles show a divergence between the calculated temperature from SAC module B and the measured temperature from sensor 7 in range of 15%, the machine's operator receives information that it is necessary to manually measure the inner temperature of the mould using a manual pyrometer. The operator needs to perform four measurements during four successive production cycles. The measurements made manually are introduced into the SAC module B, if the difference between them and the calculated values is higher than 10%, a coefficient correcting the mould temperatures is derived, which causes a change in the fan 13, 14 working point setting and timing.

In SAC module B, a series of signal filters is installed, which reject measurement oscillations of sensors 1, 2, 3, 6, 8, 9, 10, 11, 12 above 10%, if they are not present in the successive four production cycles.

**Reference signs**

**Letters:**

A - the master main system controlling the forming machine,

B - calculation module, and the system controlling the automatic mould cooling system, SAC

a - signal controlling the timing of the glass forming machine,

b - signal controlling the control flaps on the blank mould side (number of signals equal to the number of sections),

c - static pressure measurement on the conduit supplying the air to each section on the blank mould side (one to the number of signals equal to the number of sections),

d - mould temperature measurement on the blank mould and blow mould side, on the section, on which the set of sensors is installed (one to the number of signals equal to the number of sections times two),

e - static pressure reading on the conduit supplying the air to every section on the blow mould side (one to the amount of signals equal to the number of sections),

f - glass gob temperature reading on the distributor,

g - signal controlling the control flaps on the blow mould side (amount of signals equal to the number of sections),

h - temperature reading of:

- the cooling air in the conduit on the blank mould side (fig. 1),

- the cooling air in the conduit on the blow mould side (fig. 1),

- the cooling air in the main conduit supplying the air to the blank moulds and to the blow moulds (fig. 2 and 3),

- the cooling air upstream from the entrance to the heat exchanger (fig. 3),

- the cooling air downstream from the exit of the heat exchanger (fig. 3),

- cooling water upstream of the entrance to the heat exchanger (fig. 3),

i - temperature and humidity reading of the air on the suction of the fans,

j, k - signal controlling the working point of the cooling fan of:

- blank moulds (fig. 1),

- blow moulds (fig. 1),

- blank moulds and blow moulds (fig. 2 and 3),

l - signal from the static pressure sensor (mounted on the main conduit), and the differential pressure sensor (mounted on the inlet of the fan or on the main conduit), describing the current working point of the fan,

m - signal controlling the valve controlling the cooling water flow in the heat exchanger,

x - signal from the main system controlling the forming machine with a current timing setting, cooling event duration, and production rate,

y - correction signal of the cooling event duration setting, having impact on the production rate correction,

**Numbers:**

1 - static pressure sensor on the conduits supplying the air to every section, both on the blank mould side and on the blow mould side,

2 - static pressure sensor installed on the main conduit, upstream from the air distributor to individual sections,

3 - differential pressure sensor, installed on the fan suction or on the main conduit, upstream from the air distribution to the individual sections,

4 - controlling flap (open, close, or with an intermediate position), installed on the conduits supplying the air to every section on the blank mould side,

5 - controlling flap (open, close, or with an intermediate position), installed on the conduits supplying the air to every section on the blow mould side,

6 - air temperature sensor in the conduit, upstream from the distribution of air to the individual sections,

7 - mould temperature sensor,

8 - cooling water temperature sensor upstream from the entrance to the heat exchanger,

9 - air temperature sensor upstream from the entrance to the heat exchanger,

10 - glass gob temperature sensor on the gob distributor,

11 - air temperature sensor on the fan suction,

12 - humidity sensor on the fan suction,

13 - blank mould cooling fan,

14 - blow mould cooling fan,

15 - blank mould and blow mould cooling fan,

16 - switch box with a frequency converter for the blank mould cooling fan,

17 - switch box with a frequency converter for the blow mould cooling fan,

18 - switch box with a frequency converter for the blank mould and the blow mould cooling fan,

19 - by-pass flap on the conduit between the conduit supplying the air on the blank mould and the blow mould side,

20 - gob distributor,

21 - forming machine,

22 - heat exchanger,

23 - valve controlling the cooling water flow in the heat exchanger,

24 - blank mould side moulds,

25 - blow mould side moulds.

**Claims**

1. A method for controlling the mould cooling process during forming of glass containers in an IS type glass forming machine, **characterised in that** it includes the following steps:

a) analysing the mould structure in terms of heat exchange between the glass, the mould, and the coolant,

b) receiving data from sensors (1, 2, 3, 6, 7, 8, 9, 10, 11, 12) relating to pressure loss in the conduit supplying the coolant to the mould, pressure loss in the glass forming machine, to the point of entering the mould by the coolant, gob temperature before being fed into the blank mould, air temperature and humidity in the conduit, after completing the compression work by the fan, and introducing it to the calculation module (B),

c) introducing the desired production rate and maximum time of realising the cooling event in the timing, as well as the type of material the mould is made of and/or maximum mould temperature allowed, into the calculation module (B),

d) based on the introduced and received data, performing numerical calculations in the calculation module B, deriving the working point of the fan (13, 14, 15) and cooling event timing, ensuring maximum efficiency of the cooling system.

2. A method according to claim 1, **characterised in that** the structure analysis in step (a) includes the analysis of already existing moulds and being used for production or moulds in the construction phase, before implementation into production.

3. A method according to claim 1 or 2, **characterised in that** the numerical calculations are performed with maintaining the calculation error in the range of 3% to 5%.

4. A method according to any of the claims 1 to 3, **characterised in that** the working point of the fan (13, 14, 15) includes the static pressure and volume flow of the coolant.

5. A method according to any of the claims 1 to 4, **characterised in that** the numerical calculations performed in the calculation module (B) return the structure parameters of the cooling ducts in the moulds, preferably their shape, location and size.

6. A method according to any of the claims 1 to 4, **characterised in that** the numerical calculations performed in the calculation module (B) return the structure parameters of the cooling nozzles in the moulds, preferably their shape, location and size.

7. A method according to any of the claims 1 to 6, **characterised in that** the current data from the switch box (16, 17, 18) of the coolant pump and data relating the gob cutting rate are introduced into the calculation module (B).

8. A method according to any of the claims 1 to 7, **characterised in that** the numerical calculations are performed periodically, preferably in every production cycle.

9. A system for controlling the mould cooling process during forming of glass containers in an IS type glass forming machine as defined in claim 1, **characterised in that** it comprises a calculation module (B) connected to the module (A) controlling the timing of the glass forming machine, to the fan controller located in the switch box (16, 17, 18), which is connected to at least one cooling fans (13, 14, 15) and sensors (1, 2, 3, 6, 7, 8, 9, 10, 11, 12) providing data for calculations.

10. A system according to claim 9, **characterised in that** it additionally comprises a heat exchanger (22) lowering the coolant temperature upstream from the entrance to the section of the glass forming machine.

11. A system according to claim 9 or 10, **characterised in that** the sensors (1, 2, 3, 6, 7, 8, 9, 10, 11, 12) providing the data for calculations have been chosen from a group including: coolant temperature sensors, humidity sensor, static pressure sensor, differential pressure sensor in the main conduit, glass gob temperature sensor, mould temperature sensor, glass container temperature sensor after leaving the blow mould.

12. A system according to any of the claims 9 to 11, **characterised in that** the fan (13, 14, 15) comprises two replaceable impellers or an impeller with variable blade geometry.

13. A system according to any of the claims 9 to 12, **characterised in that** it comprises two fans (13) and (14) providing the coolant to the blank moulds (24) and the blow moulds (25), respectively.

14. A system according to any of the claims 9 to 13, **characterised in that** it additionally comprises an air humidifier, increasing the thermal capacity of the coolant.

**Patentansprüche**

1. Ein Verfahren zur Kontrolle des Abkühlprozesses einer Form während der Herstellung von Glasbehältern in einer Glasformmaschine vom IS-Typ, dadurch charakterisiert, dass es die folgenden Schritte umfasst:

a) Analysieren der Formstruktur bezüglich Wärmeaustausch zwischen dem Glas, der Form und dem Kühlmittel,

b) Empfangen von Daten von Sensoren (1, 2, 3, 6, 7, 8, 9, 10, 11, 12) bezüglich Druckverlust in der Leitung, die das Kühlmittel zur Form führt, Druckverlust in der Glasformmaschine an dem Punkt, an dem das Kühlmittel in die Form eintritt, Postentemperatur vor dem Eintritt in die Vorform, Lufttemperatur und Feuchtigkeit in der Leitung nach Vollendung der Kompressionsarbeit durch den Lüfter, ein Einbringen in das Rechenmodul (B),

c) Einbringen der erwünschten Produktionsrate und maximalen Zeit zur Realisierung des Kühlereignisses in der Steuerung, sowie des Materialtyps aus dem die Form gefertigt ist und /oder der maximal erlaubten Formtemperatur in das Rechenmodul (B),

d) basierend auf den vorgegebenen und empfangenen Daten, Ausführen von numerischen Berechnungen im Rechenmodul B, Ableiten des Betriebspunkts des Lüfters (13, 14, 15) und der Kühlereignissteuerung, was zu maximaler Effizienz des Kühlsystems führt.

2. Ein Verfahren nach Anspruch 1, dadurch charakterisiert, dass die Strukturanalyse in Schritt (a) die Analyse von bereits bestehenden für die Herstellung verwendeten Formen oder in der Konstruktionsphase befindlichen Formen umfasst, vor Implementierung in die Herstellung.

3. Ein Verfahren nach Anspruch 1 oder 2, dadurch charakterisiert, dass die numerischen Berechnungen unter Einhaltung eines Berechnungsfehlers im Bereich 3% bis 5% ausgeführt werden.

4. Ein Verfahren nach einem der Ansprüche 1 bis 3, dadurch charakterisiert, dass der Betriebspunkt des Lüfters (13, 14, 15) den statischen Druck und Volumenfluss des Kühlmittels umfasst.

5. Ein Verfahren nach einem der Ansprüche 1 bis 4, dadurch charakterisiert, dass die im Rechenmodul (B) durchgeführten numerischen Berechnungen die Strukturparameter der Kühlkanäle in den Formen zurückliefern, vorzugsweise deren Form, Ort und Größe.

6. Ein Verfahren nach einem der Ansprüche 1 bis 4, dadurch charakterisiert, dass die im Rechenmodul (B) durchgeführten numerischen Berechnungen die Strukturparameter der Kühldüsen in den Formen zurückliefern, vorzugsweise deren Form, Ort und Größe.

7. Ein Verfahren nach einem der Ansprüche 1 bis 6, dadurch charakterisiert, dass die aktuellen Daten von der Schaltbox (16, 17, 18) der Kühlmittelpumpe und Daten bezüglich der Postenschneiderate in das Rechenmodul (B) eingebracht werden.

8. Ein Verfahren nach einem der Ansprüche 1 bis 7, dadurch charakterisiert, dass die numerischen Berechnungen periodisch, vorzugsweise in jedem Produktionszyklus durchgeführt werden.

9. Ein System zur Kontrolle des Abkühlprozesses einer Form während der Herstellung von Glasbehältern in einer Glasformmaschine vom IS-Typ wie in Anspruch 1 definiert, dadurch charakterisiert, dass es ein Rechenmodul (B) umfasst, das mit dem Modul (A), das die Steuerung der Glasformmaschine kontrolliert, und dem Lüfterregler verbunden ist, der sich in der Schaltbox (16, 17, 18) befindet, welche mit mindestens einem Kühllüfter (13, 14, 15) und Sensoren (1, 2, 3, 6, 7, 8, 9, 10, 11, 12) verbunden ist, welche Daten für Berechnungen liefern.

10. Ein System nach Anspruch 9, dadurch charakterisiert, dass es zusätzlich einen Wärmeaustauscher (22) umfasst, der die Kühlmitteltemperatur oberhalb des Eintritts in die Sektion der Glasformmaschine erniedrigt.

11. Ein System nach Anspruch 9 oder 10, dadurch charakterisiert, dass die Sensoren (1, 2, 3, 6, 7, 8, 9, 10, 11, 12), die die Daten für Berechnungen liefern, aus einer Gruppe ausgewählt wurden, umfassend: Kühlmitteltemperatursensoren, Feuchtigkeitssensor, statischer Drucksensor, Differentialdrucksensor in der Hauptleitung, Glaspostentemperatursensor, Formtemperatursensor, Glasbehältertemperatursensor nach Verlassen der Blasform.

12. Ein System nach einem der Ansprüche 9 bis 11, dadurch charakterisiert, dass der Lüfter (13, 14, 15) zwei austauschbare Lüfterräder oder ein Lüfterrad mit variabler Blattgeometrie umfasst.

13. Ein System nach einem der Ansprüche 9 bis 12, dadurch charakterisiert, dass es zwei Lüfter (13) und (14) umfasst, die das Kühlmittel an die Vorform (24) bzw. die Blasform (25) liefern.

14. Ein System nach einem der Ansprüche 9 bis 13, dadurch charakterisiert, dass es zusätzlich einen Luftbefeuchter umfasst, der die thermische Kapazität des Kühlmittels erhöht.

**Revendications**

1. Procédé de commande du processus de refroidissement de moule pendant la formation de contenants en verre dans une machine à former le verre de type IS (à sections individuelles), **caractérisé en ce qu'**il comprend les étapes suivantes consistant à :

a) analyser la structure de moule en termes d'échange de chaleur entre le verre, le moule et le fluide caloporteur,

b) recevoir des données de capteurs (1, 2, 3, 6, 7, 8, 9, 10, 11, 12) concernant une perte de pression dans le conduit fournissant le fluide caloporteur au moule, une perte de pression dans la machine à former le verre, au moment de l'entrée dans le moule par le fluide caloporteur, la température de paraison avant l'entrée dans le moule d'ébauche, la température de l'air et l'humidité dans le conduit après achèvement du travail de compression par le ventilateur, et les introduire dans le module de calcul (B),

c) introduire dans le module de calcul (B) le rythme de production souhaité et le temps maximum de réalisation de l'événement de refroidissement dans la synchronisation, ainsi que le type de matériau dont le moule est constitué et/ou la température maximale de moule autorisée,

d) sur la base des données introduites et reçues, réaliser des calculs numériques dans le module de calcul B, dériver le point de fonctionnement du ventilateur (13, 14, 15) et la synchronisation d'événement de refroidissement, en assurant une efficacité maximale du système de refroidissement.

2. Procédé selon la revendication 1, **caractérisé en ce que** l'analyse de structure à l'étape (a) comprend l'analyse de moules déjà existants et utilisés pour la production ou de moules en phase de construction, avant une mise en œuvre en production.

3. Procédé selon la revendication 1 ou 2, **caractérisé en ce que** les calculs numériques sont effectués en maintenant l'erreur de calcul dans la plage de 3 % à 5 %.

4. Procédé selon l'une quelconque des revendications 1 à 3, **caractérisé en ce que** le point de fonctionnement du ventilateur (13, 14, 15) comprend la pression statique et l'écoulement volumique du fluide caloporteur.

5. Procédé selon l'une quelconque des revendications 1 à 4, **caractérisé en ce que** les calculs numériques effectués dans le module de calcul (B) renvoient les paramètres de structure des conduits de refroidissement dans les moules, de préférence leur forme, leur emplacement et leur taille.

6. Procédé selon l'une quelconque des revendications 1 à 4, **caractérisé en ce que** les calculs numériques effectués dans le module de calcul (B) renvoient les paramètres de structure des buses de refroidissement dans les moules, de préférence leur forme, leur emplacement et leur taille.

7. Procédé selon l'une quelconque des revendications 1 à 6, **caractérisé en ce que** les données actuelles provenant du boîtier de commutation (16, 17, 18) de la pompe à fluide caloporteur et les données relatives à la vitesse de coupe de paraison sont introduites dans le module de calcul (B).

8. Procédé selon l'une quelconque des revendications 1 à 7, **caractérisé en ce que** les calculs numériques sont effectués périodiquement, de préférence à chaque cycle de production.

9. Système pour commander le processus de refroidissement de moule pendant la formation de contenants en verre dans une machine à former le verre de type IS telle que revendiquée dans la revendication 1, **caractérisé en ce qu'**il comprend un module de calcul (B) connecté au module (A) commandant la synchronisation de la machine à former le verre, au dispositif de commande de ventilateur situé dans le boîtier de commutation (16, 17, 18), qui est connecté à au moins un ventilateur de refroidissement (13, 14, 15) et à des capteurs (1, 2, 3, 6, 7, 8, 9, 10, 11, 12) et fournissant des données pour des calculs.

10. Système selon la revendication 9, **caractérisé en ce qu'**il comprend en outre un échangeur de chaleur (22) abaissant la température de fluide caloporteur en amont de l'entrée vers la section de la machine à former le verre.

11. Système selon la revendication 9 ou 10, **caractérisé en ce que** les capteurs (1, 2, 3, 6, 7, 8, 9, 10, 11, 12) fournissant les données pour les calculs ont été choisis dans un groupe comprenant : des capteurs de température de fluide caloporteur, un capteur d'humidité, un capteur de pression statique, un capteur de pression différentielle dans le conduit principal, un capteur de température de paraison de verre, un capteur de température de moule, un capteur de température de contenant en verre après avoir quitté le moule de soufflage.

12. Système selon l'une quelconque des revendications 9 à 11, **caractérisé en ce que** le ventilateur (13, 14, 15) comprend deux hélices remplaçables ou une hélice à géométrie de pale variable.

13. Système selon l'une quelconque des revendications 9 à 12, **caractérisé en ce qu'**il comprend deux ventilateurs (13) et (14) fournissant le fluide caloporteur aux moules d'ébauche (24) et aux moules de soufflage (25), respectivement.

**14.** Système selon l'une quelconque des revendications 9 à 13, **caractérisé en ce qu'**il comprend en outre un humidificateur d'air, augmentant la capacité thermique du fluide caloporteur.

Fig. 1

Fig. 2

IS machine
control system

A

calculation module,
fan working point control
SAC

B

Gob distributor

blank side

blow side

I  II  III  ...  ..  n

IS machine
control system

A

7

blank side

blow side

Gob distributor

calculation module,
fan working point control

B

22

23

6

8

9

2

3

15

12  11

18

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3953188 A
- DE 102004054254

- EP 1136453 A
- US 4654066 A